# EUROPEAN PATENT SPECIFICATION

(11) **EP 4 447 199 B1**
(45) Date of publication and mention of the grant of the patent: **08.04.2026**
(21) Application number: 23910996.0
(22) Date of filing: 29.12.2023
(51) Int. Cl.: H01M 10/625, H01M 10/6556, H01M 10/6568, H01M 50/204, H01M 10/613, F28D 1/06, F28F 19/01, F28D 1/02

(54) **BATTERY PACK**
BATTERIEPACK
BLOC-BATTERIE

(30) Priority: 30.12.2022 CN 202223599518 U
(43) Date of publication of application: 16.10.2024
(73) Proprietor: SVOLT Energy Technology Co., Ltd., Changzhou, Jiangsu 213200 (CN)
(72) Inventor: QU, Fanduo, hangzhou, Jiangsu 213200 (CN); YANG, Zhenyu, hangzhou, Jiangsu 213200 (CN); ZHANG, Demin, hangzhou, Jiangsu 213200 (CN)
(74) Representative: Michalski Hüttermann & Partner Patentanwälte mbB
(86) International application number: PCT/CN2023/143564
(87) International publication number: WO 2024/141083

(56) References cited:
- CN-A- 111 952 510
- CN-A- 111 952 510
- CN-U- 208 336 451
- CN-U- 208 336 451
- CN-U- 212 967 812
- CN-U- 216 054 908
- CN-U- 216 054 908
- CN-U- 216 529 125
- CN-U- 218 896 700

## Description

### Cross-reference to related applications

The present application is based on Chinese patent application No. 20222359518.0 (filed on December 30th, 2022), and claims the priority of the above-mentioned Chinese patent application.

### Technical field

The present application relates to the technical field of batteries, in particular relates to a battery pack.

### Technical background

The existing battery pack uses a way of immersing the battery cell in the immersion solution to achieve heat dissipation, and the immersion solution can also play a certain insulating role when it is in direct contact with the battery cell. However, when metal particles are mixed in the immersion solution, the insulation of the battery pack will fail, which makes the battery pack have a risk of short circuit.CN 111952510A and CN 208336451 A disclose battery packs with cooling fluids.

### Summary of the invention

The present application aims at solving at least one of the technical problems existing in the prior art. Therefore, an objective of the present application is to provide a battery pack, wherein the cooling liquid in the battery pack can be filtered to prevent impurities in the cooling liquid from getting in contact with the battery cell, thereby reducing the risk of short circuit and improving the safety of the battery pack.

The battery pack according to claim 1 comprises a housing that delimits an accommodating cavity, wherein the housing has a side wall; a battery cell arranged in the accommodating cavity; cooling liquid contained in the accommodating cavity, wherein the battery cell is at least partially immersed in the cooling liquid; wherein a first flow channel and a second flow channel are defined within the side wall, the first flow channel and the second flow channel are interconnected through a connection port, a filter is arranged at the connection port, and the filter allows the cooling liquid to pass through and blocks impurities; the side wall is provided with a first opening and a second opening, the first opening is connected with the first flow channel, and the second opening is connected with the second flow channel, and the cooling liquid is configured to flow from the second flow channel to the first flow channel.

As recited in claim 1, the first flow channel and the second flow channel are defined within the side wall, and the connection port between the first flow channel and the second flow channel is provided with a filter, which can be used for allowing the cooling liquid to pass through and blocking impurities. When the cooling liquid flows from the second flow channel to the first flow channel, impurities contained in the cooling liquid are blocked and accumulate in the second flow channel, so that the cooling liquid flowing from the first flow channel to the accommodating cavity is pure cooling liquid without impurities. After circulating for many times, the impurities contained in the cooling liquid gradually accumulate in the second flow channel, thus effectively reducing the impurity content of the cooling liquid in the accommodating cavity, reducing the risk of impurities getting in contact with the battery cell and improving the safety of use of the battery pack.

In some embodiments, the side wall is provided with a mounting cavity into which the filter can be inserted, and the mounting cavity is arranged adjacent to the connection port; and the side wall further comprises a mounting plate for closing the mounting cavity.

In some embodiments, the filter is fixedly connected to the mounting plate, and the mounting plate is detachable on the side wall.

In some embodiments, one part of the mounting cavity is opposite to the first flow channel and another part thereof is opposite to the second flow channel, the connection port is open to the mounting cavity, and the filter is plugged in the connection port through the mounting cavity; the first opening and/or the second opening are formed in the mounting plate.

In some embodiments, the connection port comprises a first connection port, and the filter comprises a first filter located at the first connection port; the mounting cavity comprises a first mounting cavity into which the first filter can be inserted, and the first mounting cavity is arranged adjacent to the first connection port; the mounting plate comprises a first mounting plate that closes the first mounting cavity, and the first opening is formed in the first mounting plate.

Specifically, the first filter is arranged horizontally, at least part of the first flow channel is located above the first filter, at least part of the second flow channel is located below the first filter, and the first opening is located above the first filter; the first mounting plate is connected with a partition board, a lower end of the partition board is connected with one side of the first filter away from the second opening, and an upper end of the partition board is connected with a top wall of the first flow channel.

In some embodiments, the connection port comprises a second connection port, and the filter comprises a second filter located at the second connection port; the mounting cavity comprises a second mounting cavity into which the second filter can be inserted, and the second mounting cavity is arranged adjacent to the second connection port; the mounting plate comprises a second mounting plate that closes the second mounting cavity, and the second opening is formed in the second mounting plate.

Specifically, the second filter comprises a horizontal filter member and an inclined filter member, one end of the inclined filter member is connected with the horizontal filter, and the other end of the inclined filter member is located above the horizontal filter; at least part of the first flow channel is located above the horizontal filter member, at least part of the second flow channel is located below the horizontal filter member, and the other end of the inclined filter member is connected with a top wall of the first flow channel; the second opening is located below the second filter, and part of an edge contour of the second opening is consistent with the shape of the second filter

In some embodiments, the side wall is provided with a plurality of micropores, and the micropores are connected in communication with at least one of the first flow channel and the second flow channel

Specifically, a surface of the micropores is provided with a barrier diaphragm which can allow the cooling liquid to pass through and block impurities.

Additional aspects and advantages of the invention will be set forth in part in the description which follows, and in part will be apparent from the description which follows, or may be learned by practice of the present application.

### Brief description of the appended drawings

In order to explain the technical scheme of the present application more clearly, the appended drawings needed in describing the implementation ways will be briefly introduced below.
Fig. 1 is a schematic structural view of a battery pack according to an embodiment of the present invention;
Fig. 2 is a schematic structural view of the battery pack after hiding some battery cells according to an embodiment of the present invention;
Fig. 3 is a schematic structural view of the battery pack after hiding the mounting plates according to the example shown in Fig. 2;
Fig. 4 is a structural schematic diagram of a first mounting plate of a battery pack according to an embodiment of the present invention;
Fig. 5 is a structural schematic diagram of a second mounting plate of a battery pack according to an embodiment of the present invention;
Fig. 6 is a top view of a battery pack according to the example shown in Fig. 2;
Fig. 7 is a cross-sectional view taken alone the line A-A according to the example shown in Fig. 6;
Fig. 8 is a top view of a battery pack according to the example shown in Fig. 1;
Fig. 9 is a front view of a battery pack according to the example shown in Fig. 1;
Fig. 10 is a cross-sectional view taken alone the line B-B according to the example shown in Fig. 9;
Fig. 11 is a partially enlarged view of area C according to the example shown in Fig. 10;
Fig. 12 is a schematic structural view of a battery pack according to a specific embodiment of the present invention.

Reference numeral:
a battery pack 100;
a housing 1; an accommodating cavity 10; a side wall 11; a mounting cavity 110; a first mounting cavity 111; a second mounting cavity 112; micropores 12;
battery cell 2;
a first flow channel 31; a second flow channel 32; a baffle wall 33; a first connection port 341; a second connection port 342;
a mounting plate 4; a first mounting plate 41; a first opening 411; a partition board 412; a second mounting plate 42; a second opening 421;
a first filter 51; a second filter 52; a horizontal filter member 521; an inclined filter member 522.

### Detailed description of specific embodiments

Hereinafter, embodiments of the present invention will be described in detail, examples of which are illustrated in the appended drawings, wherein the same or similar reference numerals indicate the same or similar elements or elements having the same or similar functions throughout. The embodiments described below with reference to the appended drawings are exemplary and are intended only to explain the present application, and cannot be understood as limitations to the present application. The scope of the invention is defined by the appended claims.

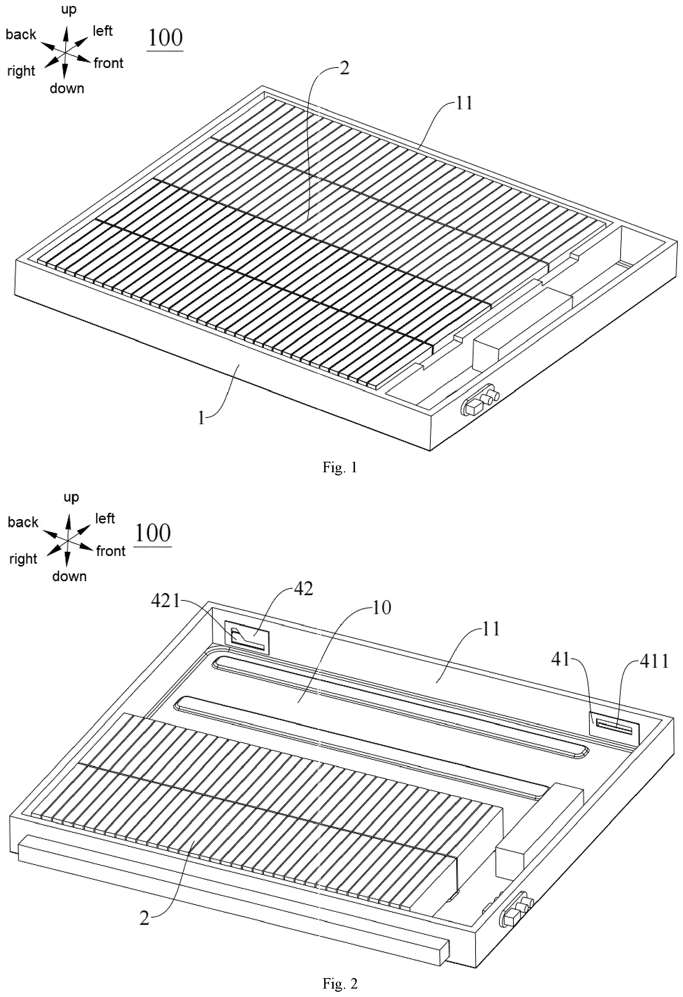

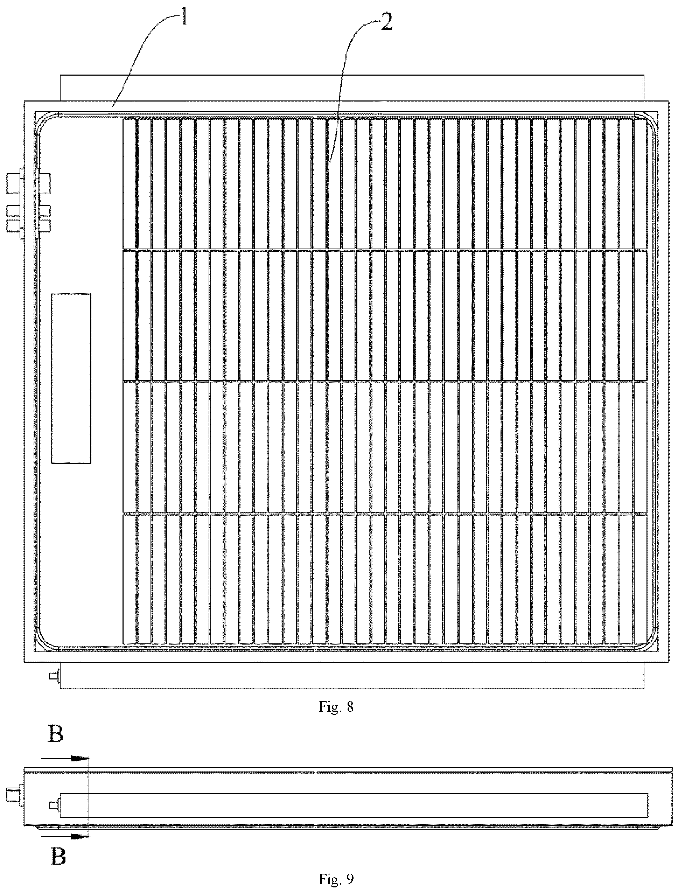

A battery pack 100 according to embodiments of the present invention will be described below with reference to Figs. 1 to 12.

The battery pack 100 according to the embodiments of the present invention comprises a housing 1, a battery cell 2 and cooling liquid, wherein the housing 1 delimits an accommodating cavity 10, and the housing 1 has a side wall 11; the battery cell 2 is arranged in the accommodating cavity 10, and the cooling liquid is contained in the accommodating cavity 10, and the battery cell 2 is at least partially immersed in the cooling liquid. The housing 1 plays the role of support and protection. As shown in Fig. 1, a plurality of battery cells 2 are stacked in the accommodating cavity 10 formed by the housing 1, and the housing 1 protects the internal battery cells 2. The cooling liquid is contained in the accommodating cavity 10, and the battery cell 2 is at least partially immersed in the cooling liquid. The cooling liquid is in direct contact with the battery cell 2 to dissipate heat, and the direct contact of the cooling liquid with the battery cell 2 can also play a certain insulating role, thus improving the safety of the battery pack 100.

The housing 1 of the battery pack 100 comprises a plurality of side walls 11, and a first flow channel 31 and a second flow channel 32 are defined within the side walls 11. The first flow channel 31 and the second flow channel 32 are interconnected through a connection port, and the cooling liquid can flow between the first flow channel 31 and the second flow channel 32. At the same time, the side wall 11 is provided with a first opening 411 and a second opening 421, wherein the first opening 411 is connected with the first flow channel 31 and the second opening 421 is connected with the second flow channel 32, so that the cooling liquid can flow between the first flow channel 31, the accommodating cavity 10 and the second flow channel 32.

The connection port between the first flow channel 31 and the second flow channel 32 is provided with a filter, which can allow the cooling liquid to pass through and block impurities. Therefore, when the cooling liquid flows from the second flow channel 32 to the first flow channel 31, impurities contained in the cooling liquid, such as metal particles, are blocked in the second flow channel 32 by the filter, and the cooling liquid can smoothly flow to the first flow channel 31

The cooling liquid in the battery pack 100 flows in a sequence from the first flow channel 31, to the accommodating cavity 10, to the second flow channel 32 and back to the first flow channel 31. The cooling liquid flows from the first flow channel 31 to the accommodating cavity 10 through the first opening 411. After getting in contact with the battery cell 2 in the accommodating cavity 10, the cooling liquid flows from the accommodating cavity 10 to the second flow channel 32 through the second opening 421, and then flows to the first flow channel 31 through the connection port. In a process of the cooling liquid flowing from the second flow channel 32 to the first flow channel 31, impurities contained in the cooling liquid are blocked by the filter and remain in the second flow channel 32. Therefore, the cooling liquid flowing from the first flow channel 31 to the accommodating cavity 10 is pure cooling liquid without impurities. After circulating for many times, the impurities contained in the cooling liquid gradually accumulate in the second flow channel 32, which can effectively reduce the impurity content of the cooling liquid in the accommodating cavity 10, reduce the risk of impurities getting in contact with the battery cell 2, and improve the safety of use of the battery pack 100.

According to the battery pack 100 of the embodiments of the present invention, the first flow channel 31 and the second flow channel 32 are defined within the side wall 11, and a filter is arranged at the connection port between the first flow channel 31 and the second flow channel 32, so that the filter can be used for allowing the cooling liquid to pass through and blocking impurities. When the cooling liquid flows from the second flow channel 32 to the first flow channel 31, impurities contained in the cooling liquid are blocked and accumulate in the second flow channel 32, so that the cooling liquid flowing from the first flow channel 31 to the accommodating cavity 10 is pure cooling liquid without impurities. After circulating for many times, the impurities contained in the cooling liquid gradually accumulate in the second flow channel 32, thus effectively reducing the impurity content of the cooling liquid in the accommodating cavity 10, reducing the risk of impurities getting in contact with the battery cell 2, and improving the safety of use of the battery pack 100.

In some embodiments of the present invention, the housing 1 of the battery pack 100 comprises four side walls 11. Optionally, a first flow channel 31 and a second flow channel 32 may be defined within one of the side walls 11, and the cooling liquid only flows between the first flow channel 31 and the second flow channel 32 within this side wall 11 and the accommodating cavity 10. It is also possible to define a first flow channel 31 and a second flow channel 32 within each of a plurality of side walls 11, and the cooling liquid can flow between a plurality of different first flow channels 31, different second flow channels 32 and the accommodating cavity 10, which also falls within the protection scope of the present application. Since the filter is arranged between the first flow channel 31 and the second flow channel 32, the cooling liquid flowing from different first flow channels 31 to the accommodating cavity 10 is pure cooling liquid without impurities, and the impurities contained in the cooling liquid accumulate in a plurality of second flow channels 32, so that the impurity content of the cooling liquid in the accommodating cavity 10 can be effectively reduced

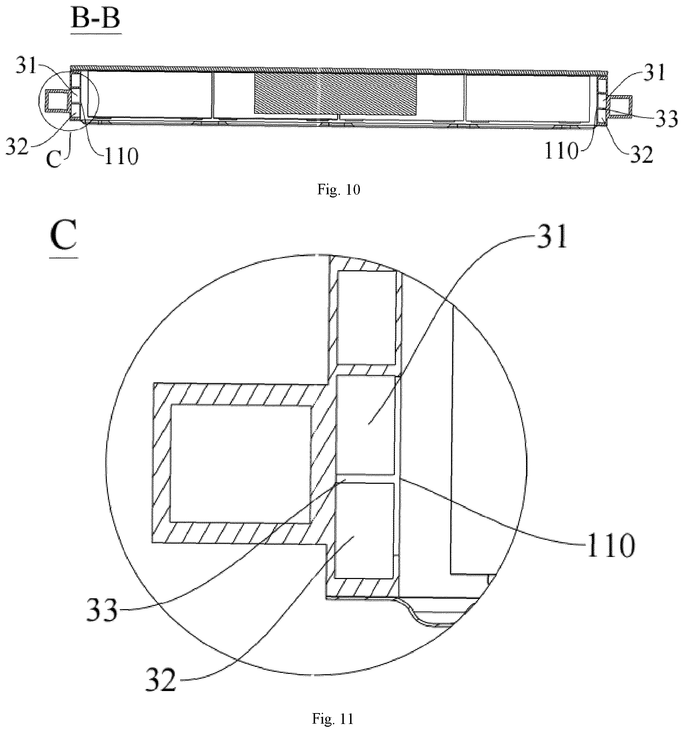

In some specific embodiments of the present invention, as shown in Fig. 10, a first flow channel 31 and a second flow channel 32 are defined within each of two opposite first and second side walls 11, and the corresponding connection port between the first flow channel 31 and the second flow channel 32 within each side wall is provided with a filter, so that the cooling liquid can flow between different first flow channels 31, different second flow channels 32 and the accommodating cavity 10. The cooling liquid flowing from the first flow channel 31 within the first side wall 11 and from the first flow channel 31 within the second side wall 11 to the accommodating cavity 10 is pure cooling liquid without impurities. Impurities contained in the cooling liquid accumulate in the second flow channel 32 within the first side wall 11 and in the second flow channel 32 within the second side wall 11 as the circulation flow continues, so that the impurity content of the cooling liquid in the accommodating cavity 10 can be effectively reduced.

In some specific embodiments of the present invention, the battery pack 100 further comprises a pump component, which drives the cooling liquid to flow from the second flow channel 32 to the first flow channel 31, and makes the cooling liquid in the battery pack 100 flow in sequence along a path from the first flow channel 31, to the accommodating cavity 10, to the second flow channel 32 and back to the first flow channel 31, so as to prevent the cooling liquid from flowing backwards and improve the working stability of the battery pack 100

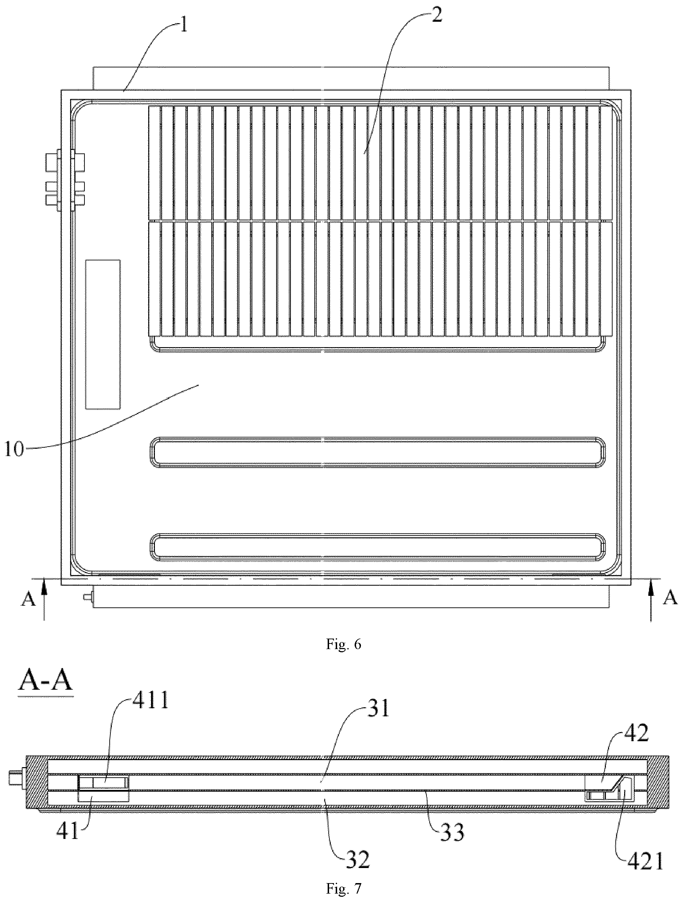

In some specific embodiments of the present invention, as shown in Figs. 7 and 10, the first flow channel 31 is located above the second flow channel 32, and after the cooling liquid flows to the second flow channel 32 via the second opening 421, impurities are more likely to precipitate in the second flow channel 32 under the action of gravity.

The battery pack 100 of the present invention is provided with a filter at the connection port between the first flow channel 31 and the second flow channel 32, which can filter and purify the cooling liquid when it flows from the second flow channel 32 to the first flow channel 31. The location and number of such connection port can be selected according to actual needs.

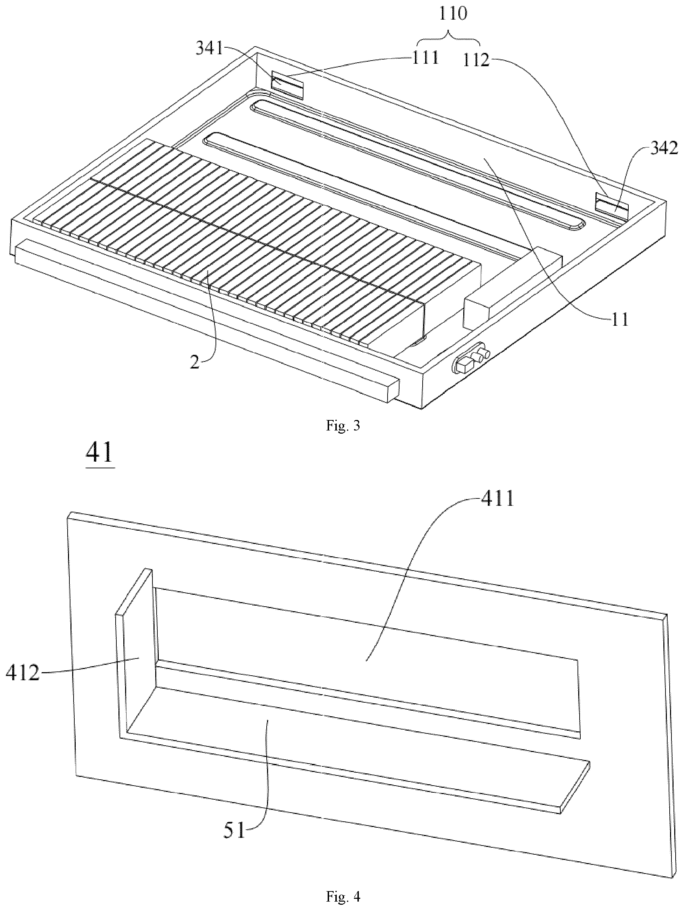

In some embodiments of the present invention, as shown in Fig. 3, the side wall 11 is provided with a mounting cavity 110 into which the filter can be inserted, and the mounting cavity 110 is arranged adjacent to the connection port. It can be understood that the housing 1 of the battery pack 100 plays a protective role for the internal battery cells 2, and it would be a difficult machining process to produce a connection port between the first flow channel 31 and the second flow channel 32 within in the side wall 11 and provide a filter at the connection port, which reduces the production efficiency. Therefore, in some embodiments, as shown in Figs. 2 and 3, the mounting cavity 110 is opened on the side wall 11, and the mounting cavity 110 is in communication with the first flow channel 31 and/or the second flow channel 32, and then the connection port is arranged and machined at the opened mounting cavity 110, and then the filter is installed onto the connection port via the mounting cavity 110, so that the machining efficiency for the battery pack 100 of the present application can be improved.

In some embodiments of the present invention, the side wall 11 is provided with a mounting cavity 110, and the side wall 11 is also provided with a mounting plate 4 for closing the mounting cavity 110. The mounting cavity 110 is provided in the side wall 11 for opening the connection port and mounting the filter, and the mounting cavity 110 is in communication with the first flow channel 31 and/or the second flow channel 32. After the connection port is opened and the filter is installed, the mounting cavity 110 can be closed by setting the mounting plate 4 so as to prevent flow mixing of the cooling liquid.

The mounting cavity 110 may be in communication with the first flow channel 31, the mounting cavity 110 may also be in communication with the second flow channel 32, and the mounting cavity 110 may also be in communication with both the first flow channel 31 and the second flow channel 32 at the same time. The mounting cavity 110 is providing for opening the connection port and installing the filter, and the specific arrangement position and number of such mounting cavity 110 can be selected according to actual needs.

In some embodiments of the present invention, the side wall 11 is provided with a mounting cavity 110, and the side wall 11 is also provided with a mounting plate 4 for closing the mounting cavity 110, and the filter needs to be arranged at the connection port, and the connection port is arranged adjacent to the mounting cavity 110, so that the filter can be directly and fixedly connected to the mounting plate 4, and the installation of both the filter and the mounting plate 4 can be combined into one action, wherein the filter can be directly installed in place when the mounting plate 4 is installed on the mounting cavity 110, thereby further improving the machining efficiency for the battery pack 100 of the present application.

In some embodiments of the present invention, the mounting plate 4 is detachable on the side wall 11, and by configuring the mounting plate 4 to be detachably connected with the side wall 11, it is convenient for demounting and replacing the filter, thereby prolonging the service life

The mounting plate 4 can be assembled onto the side wall 11 by screwing, gluing or bonding, which is not particularly limited herein.

In some specific embodiments of the present invention, the side wall 11 is constructed as a multi-cavity structure by profiled extrusion or rolling to form a first flow channel 31 and a second flow channel 32 within the side wall 11. As shown in Figs. 2 and 6, the first flow channel 31 is located above the second flow channel 32, and the first flow channel 31 and the second flow channel 32 are separated by a baffle wall 33. The baffle wall 33 is provided with a connection port passing through it, so that the first flow channel 31 and the second flow channel 32 are in communication with each other through the connection port.

In some specific embodiments of the present invention, the mounting cavity 110 is connected with both the first flow channel 31 and the second flow channel 32, with one part of the mounting cavity 110 opposite to the first flow channel 31 and the other part thereof opposite to the second flow channel 32. The connection port is open to the mounting cavity 110, and the filter is inserted into the connection port through the mounting cavity 110. When the mounting plate 4 is installed on the side wall 11, the filter can become directly inserted into the connection port to improve the efficiency of machining and assembling.

It can be understood that the side wall 11 needs to be provided with a first opening 411 and a second opening 421 to respectively connect the first flow channel 31 and the second flow channel 32 in communication with the accommodating cavity 10. By opening the mounting cavity 110 in the side wall 11, the mounting cavity 110 directly connects the first flow channel 31 and/or the second flow channel 32 in communication with the accommodating cavity 10, so a step of re-opening a hole in the side wall 11 can be omitted. The mounting plate 4 is provided with the first opening 411 and/or the second opening 421, so that the first flow channel 31 and/or the second flow channel 32 can be connected in communication with the accommodating cavity 10. For example, the first opening 411 is formed in the mounting plate 4, and the mounting cavity 110 is connected in communication with the first flow channel 31, and when the mounting plate 4 is connected onto the side wall 11, the first opening 411 becomes connected in communication with the mounting cavity 110, so that the first flow channel 31 can be connected in communication with the accommodating cavity 10. For another example, the first opening 411 is formed on the mounting plate 4, and the mounting cavity 110 is connected in communication with both the first flow channel 31 and the second flow channel 32, and when the mounting plate 4 is connected onto the side wall 11, the mounting plate 4 blocks the second flow channel 32, that is, the first opening 411 becomes connected in communication with only the first flow channel 31 through the mounting cavity 110, so that the first opening 411 can be connected in communication with the accommodating cavity 10.

In some embodiments of the present invention, as shown in Fig. 2, the connection port comprises a first connection port 341, and the filter comprises a first filter 51 located at the first connection port 341. The mounting cavity 110 comprises a first mounting cavity 111 into which the first filter 51 can be inserted. The first mounting cavity 111 is arranged in the side wall 11 to be adjacent to the first connection port 341, wherein a part of the first mounting cavity 111 is opposite to the first flow channel 31, and another part of the first mounting cavity 111 is opposite to the second flow channel 32. The mounting plate 4 comprises a first mounting plate 41 that closes the first mounting cavity 111, and the first opening 411 is formed in the first mounting plate 41. When the first mounting plate 41 is connected onto the side wall 11, the first mounting plate 41 blocks the second flow channel 32 and the first opening 411 on the first mounting plate 41 becomes connected in communication with only the first flow channel 31. The cooling liquid can flow from the first flow channel 31 into the accommodating cavity 10 through the first opening 411, and can flow from the second flow channel 32 into the first flow channel 31 through the first connection port 341. The impurities contained in the cooling liquid are filtered by the first filter 51, so that the impurities contained in the cooling liquid are blocked and accumulate in the second flow channel 32.

In some specific embodiments of the present invention, as shown in Figs. 2 and 4, the first filter 51 is arranged horizontally, at least part of the first flow channel 31 is located above the first filter 51, at least part of the second flow channel 32 is located below the first filter 51, and the first opening 411 is located above the first filter 51.

The first filter 51 is arranged horizontally, the first flow channel 31 is located above the first filter 51, the second flow channel 32 is located below the second flow channel 32, and the first filter 51 is arranged opposite to the baffle wall 33. By providing the first filter 51, impurities contained in the cooling liquid to flow from the second flow channel 32 into the first flow channel 31 through the first connection port 341 are filtered by the first filter 51, so that the impurities contained in the cooling liquid are blocked and accumulate in the second flow channel 32.

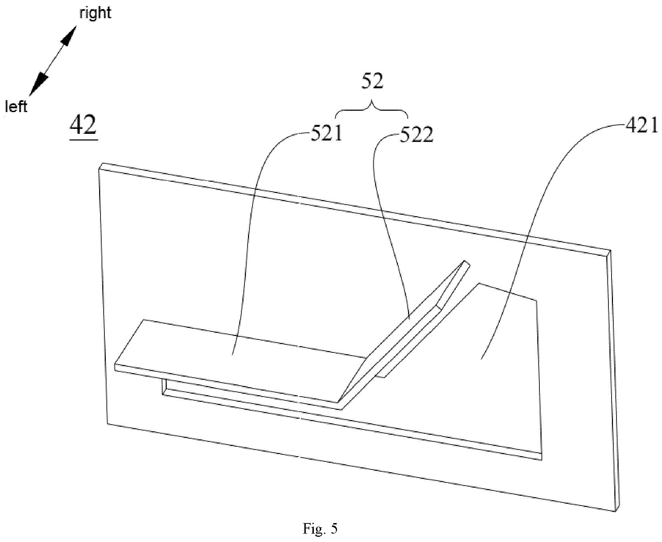

In some specific embodiments of the present invention, as shown in Fig. 5, a partition board 412 is connected to the first mounting plate 41, the lower end of the partition board 412 is connected with one side of the first filter 51 away from the second opening 421, and the upper end of the partition board 412 is connected with the top wall of the first flow channel 31.

The partition board 412 is arranged to close the first flow channel 31, so as to prevent the liquid from further flowing along the first flow channel 31 in a direction away from the second opening 421. The partition board 412 can improve the flow stability of the cooling liquid, ensure the one-way flow of the cooling liquid, reduce the liquid turbulence and improve efficiency of heat exchange.

In some embodiments of the present invention, as shown in Fig. 2, the connection port comprises a second connection port 342, and the filter comprises a second filter 52 located at the second connection port 342. The mounting cavity 110 comprises a second mounting cavity 112 into which the second filter 52 can be inserted. The second mounting cavity 112 is arranged in the sidewall 11 to be adjacent to the second connection port 342, wherein a part of the second mounting cavity 112 is opposite to the first flow channel 31, and another part of the second mounting cavity 112 is opposite to the second flow channel 32. The mounting plate 4 comprises a second mounting plate 42 that closes the second mounting cavity 112, and a second opening 421 is formed in the second mounting plate 42. When the second mounting plate 42 is connected onto the side wall 11, the second mounting plate 42 blocks the first flow channel 31 and the second opening 421 in the second mounting plate 42 becomes connected in communication with only the second flow channel 32. The cooling liquid can flow from the accommodating cavity 10 into the second flow channel 32 through the second opening 421, and can flow from the second flow channel 32 into the first flow channel 31 through the second connection port 342. The impurities contained in the cooling liquid are filtered by the second filter 52, so that the impurities contained in the cooling liquid are blocked and accumulate in the second flow channel 32

In some specific embodiments of the present invention, as shown in Figs 2 and 5, the second filter 52 comprises a horizontal filter member 521 and an inclined filter member 522, one end of the inclined filter member 522is connected with the horizontal filter member 521, and the other end of the inclined filter member 522 is located above the horizontal filter member 521. At least part of the first flow channel 31 is located above the horizontal filter member 521, and at least part of the second flow channel 32 is located below the horizontal filter member 521. The horizontal filter member 521 is opposite to the baffle wall 33, and the other end of the inclined filter member 522 is connected to the top wall of the first flow channel 31. By arranging the second filter 52 to have the horizontal filter member 521 and the inclined filter member 522, the filtering area of the second filter 52 is larger than the case of only providing a horizontal filter member 521 just opposite to the baffle wall 33, thus improving the filtering effect and the flow stability of the cooling liquid.

As shown in Fig. 5, the second opening 421 is located below the second filter 52, and part of an edge contour of the second opening 421 is consistent with the shape of the second filter 52. Since the second filter 52 comprises the horizontal filter member 521 and the inclined filter member 522, and the inclined filter member 522 is arranged in the first flow channel 31, the cooling liquid will also be filtered by the second filter 52 when it flows through the inclined filter member 522 in the first flow channel 31. Therefore, the second opening 421 can not only be connected in communication with the second flow channel 32, but also be connected in communication with the first flow channel 31. The second opening 421 is located on one side of the second filter 52 away from the first opening 411. Even if the cooling liquid further flows to the first flow channel 31 through the second opening 421, it will still be filtered by the inclined filter member 522 during its flowing towards the first opening 411. Therefore, as shown in Fig. 5, the second opening 421 can also be connected in communication with the first flow channel 31, and the shape of the edge contour of the second opening 421 is consistent with the shape of the second filter 52, so that the opening area of the second opening 421 is increased, and the flow rate of the cooling liquid is larger, thus improving the filtering effect for the cooling liquid.

In some embodiments of the present invention, as shown in Fig. 5, in the left-right direction, the included angle between the horizontal filter member 521 and the inclined filter member 522 is obtuse, so that the area of the inclined filter member 522 is increased, thus improving the filtering effect of the second filter 52.

Preferably, the included angle between the horizontal filter member 521 and the inclined filter member 522 is 90°i170°, so that impurities can automatically precipitate after getting in contact with the inclined filter member 522.

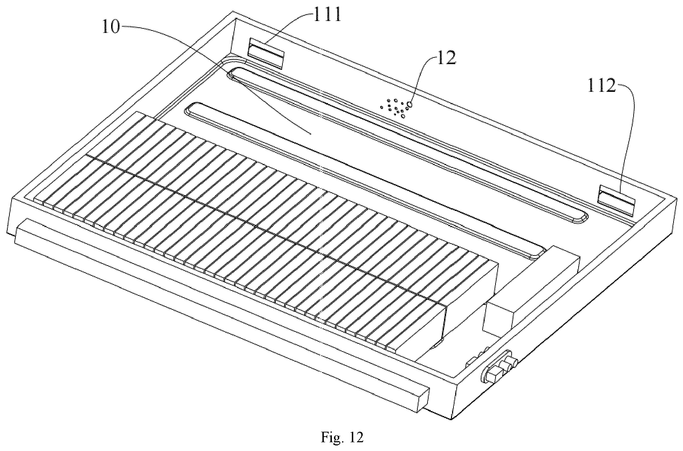

In some specific embodiments of the present invention, as shown in Fig. 12, a plurality of micropores 12 are formed in the side wall 11, and the micropores 12 are connected in communication with at least one of the first flow channel 31 and the second flow channel 32 The cooling liquid flows to the first flow channel 31 and/or the second flow channel 32 through the first opening 411 and/or the second opening 421, and then can flow into the accommodating cavity 10 through the micropores 12. The micropores 12 have a small aperture diameter. When the cooling liquid flows through the micropores 12 and enters the accommodating cavity 10, impurities contained in the cooling liquid are blocked by the micropores 12 and remain in the first flow channel 31 and/or the second flow channel 32. Therefore, the cooling liquid flowing from the micropores 12 into the accommodating cavity 10 is pure cooling liquid without impurities. After circulating for many times, the impurities contained in the cooling liquid gradually accumulate in the first flow channel 31 and/or the second flow channel 32, thus effectively reducing the impurity content of the cooling liquid in the accommodating cavity 10, reducing the risk of impurities getting in contact with the battery cell 2, and improving the safety of use of the battery pack 100.

Furthermore, a surface of the micropores 12 is provided with a barrier diaphragm, which can allow the cooling liquid to pass through and block impurities. By arranging the barrier diaphragm, the filtering effect can be further improved, and impurities can be retained in the first flow channel 31 and/or the second flow channel 32, so that the impurity content of the cooling liquid in the accommodating cavity 10 can be reduced, and the safety of use of the battery pack 100 can be further improved.

In the description of the present invention, it needs to be understood that the terms "center", "vertical", "horizontal", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" refer to the orientation or positional relationship shown in the appended drawings and are only intended to facilitate and simplify the description of the present invention, and are not intended to indicate or imply that the device or element referred to must have a particular orientation or must be constructed and operated in a particular orientation, and therefore shall not be construed as a limitation to the present invention,

In the description of the present invention, "first feature" and "second feature" may each comprise one or more such features.

In the description of the present invention, the phrase "a plurality of" means two or more.

In the description of the present invention, an arrangement of a first feature being "above" or "below" a second feature may comprise direct contact between the first and second features, or may comprise that the first and second features are not in direct contact but are connected through another feature between them.

In the description of the present invention, an arrangement of a first feature being "above", "upper" or "over" a second feature may comprise that the first feature is directly above and obliquely above the second feature, or only means that the horizontal height of the first feature is higher than that of the second feature.

Other components of the battery pack according to the embodiments of the present invention, such as battery cells, cooling liquid, etc., and the operation thereof are all known to those skilled in the art, and will not be described in detail herein.

Although the embodiments of the present invention have been shown and described, those skilled in the art can understand that various changes, modifications, substitutions and variations can be made to these embodiments without departing from the principles and purposes of the present invention, and the scope of the present invention is defined by the appended claims.

## Claims

1. A battery pack (100) comprising:
a housing (1) that delimits an accommodating cavity (10), wherein the housing has a side wall (11);
a battery cell (2) arranged in the accommodating cavity;
cooling liquid contained in the accommodating cavity, wherein the battery cell is at least partially immersed in the cooling liquid;
wherein a first flow channel (31) and a second flow channel (32) are defined within the side wall, the first flow channel and the second flow channel are interconnected through a connection port (341, 342), a filter (51, 52, 521, 522) is arranged at the connection port, and the filter allows the cooling liquid to pass through and blocks impurities;
the side wall is provided with a first opening (411) and a second opening (421), the first opening is connected with the first flow channel, and the second opening is connected with the second flow channel, and the cooling liquid is configured to flow from the second flow channel to the first flow channel.

2. The battery pack according to claim 1, **characterized in that** the side wall is provided with a mounting cavity (110, 111, 112) into which the filter can be inserted, and the mounting cavity is arranged adjacent to the connection port; and the side wall further comprises a mounting plate (4, 41, 42) for closing the mounting cavity.

3. The battery pack according to claim 2, **characterized in that** the filter is fixedly connected to the mounting plate, and the mounting plate is detachable on the side wall.

4. The battery pack according to claim 2, **characterized in that** one part of the mounting cavity is opposite to the first flow channel and another part thereof is opposite to the second flow channel, the connection port is open to the mounting cavity, and the filter is plugged in the connection port through the mounting cavity;
the first opening and/or the second opening are formed in the mounting plate.

5. The battery pack according to claim 4, **characterized in that** the connection port comprises a first connection port (341) and the filter comprises a first filter (51) located at the first connection port;
the mounting cavity comprises a first mounting cavity (111) into which the first filter can be inserted,
and the first mounting cavity is arranged adjacent to the first connection port;
the mounting plate comprises a first mounting plate (41) that closes the first mounting cavity, and
the first opening is formed in the first mounting plate.

6. The battery pack according to claim 5, **characterized in that** the first filter is arranged horizontally, at least part of the first flow channel is located above the first filter, at least part of the second flow channel is located below the first filter, and the first opening is located above the first filter;
the first mounting plate is connected with a partition board, a lower end of the partition board is connected with one side of the first filter away from the second opening, and an upper end of the partition board is connected with a top wall of the first flow channel.

7. The battery pack according to claim 5, **characterized in that** the connection port comprises a second connection port (342), and the filter comprises a second filter (52) located at the second connection port;
the mounting cavity comprises a second mounting cavity (112) into which the second filter can be inserted, and the second mounting cavity is arranged adjacent to the second connection port;
the mounting plate comprises a second mounting plate (42) that closes the second mounting cavity,
and the second opening is formed in the second mounting plate.

8. The battery pack according to claim 7, **characterized in that** the second filter comprises a horizontal filter member and an inclined filter member, one end of the inclined filter member is connected with the horizontal filter, and the other end of the inclined filter member is located above the horizontal filter;
at least part of the first flow channel is located above the horizontal filter member, at least part of the second flow channel is located below the horizontal filter member, and the other end of the inclined filter member is connected with a top wall of the first flow channel;
the second opening is located below the second filter, and part of an edge contour of the second opening is consistent with the shape of the second filter.

9. The battery pack according to any one of claims 1-8, **characterized in that** the side wall is provided with a plurality of micropores (12), and the micropores are connected in communication with at least one of the first flow channel and the second flow channel.

10. The battery pack according to claim 9, **characterized in that** a surface of the micropores is provided with a barrier diaphragm which can allow the cooling liquid to pass through and block impurities.

## Patentansprüche

1. Batteriepack (100), umfassend:
ein Gehäuse (1), das einen Aufnahmehohlraum (10) begrenzt, wobei das Gehäuse eine Seitenwand (11) aufweist;
eine Batteriezelle (2), die in dem Aufnahmehohlraum angeordnet ist;
Kühlflüssigkeit, die in dem Aufnahmehohlraum enthalten ist, wobei die Batteriezelle zumindest teilweise in die Kühlflüssigkeit eingetaucht ist;
wobei ein erster Strömungskanal (31) und ein zweiter Strömungskanal (32) innerhalb der Seitenwand definiert sind, wobei der erste Strömungskanal und der zweite Strömungskanal durch einen Verbindungsanschluss (341, 342) miteinander verbunden sind, ein Filter (51, 52, 521, 522) an dem Verbindungsanschluss angeordnet ist und der Filter ermöglicht, dass die Kühlflüssigkeit hindurchtritt und Verunreinigungen blockiert;
wobei die Seitenwand mit einer ersten Öffnung (411) und einer zweiten Öffnung (421) bereitgestellt ist, wobei die erste Öffnung mit dem ersten Strömungskanal verbunden ist und die zweite Öffnung mit dem zweiten Strömungskanal verbunden ist und die Kühlflüssigkeit dazu konfiguriert ist, von dem zweiten Strömungskanal zu dem ersten Strömungskanal zu strömen.

2. Batteriepack nach Anspruch 1, **dadurch gekennzeichnet, dass** die Seitenwand mit einem Montagehohlraum (110, 111, 112) bereitgestellt ist, in den der Filter eingesetzt werden kann, und der Montagehohlraum benachbart zu dem Verbindungsanschluss angeordnet ist; und die Seitenwand ferner eine Montageplatte (4, 41, 42) zum Schließen des Montagehohlraums umfasst.

3. Batteriepack nach Anspruch 2, **dadurch gekennzeichnet, dass** der Filter fest mit der Montageplatte verbunden ist und die Montageplatte an der Seitenwand abnehmbar ist.

4. Batteriepack nach Anspruch 2, **dadurch gekennzeichnet, dass** ein Teil des Montagehohlraums gegenüber dem ersten Strömungskanal ist und ein anderer Teil davon gegenüber dem zweiten Strömungskanal ist, der Verbindungsanschluss offen zu dem Montagehohlraum ist und der Filter in den Verbindungsanschluss durch den Montagehohlraum eingesteckt ist;
wobei die erste Öffnung und/oder die zweite Öffnung in der Montageplatte gebildet sind.

5. Batteriepack nach Anspruch 4, **dadurch gekennzeichnet, dass** der Verbindungsanschluss einen ersten Verbindungsanschluss (341) umfasst und der Filter einen ersten Filter (51) umfasst, der sich an dem ersten Verbindungsanschluss befindet;
der Montagehohlraum einen ersten Montagehohlraum (111) umfasst, in den der erste Filter eingesetzt werden kann,
und der erste Montagehohlraum benachbart zu dem ersten Verbindungsanschluss angeordnet ist;
die Montageplatte eine erste Montageplatte (41) umfasst, die den ersten Montagehohlraum schließt, und
die erste Öffnung in der ersten Montageplatte gebildet ist.

6. Batteriepack nach Anspruch 5, **dadurch gekennzeichnet, dass** der erste Filter horizontal angeordnet ist, sich zumindest ein Teil des ersten Strömungskanals über dem ersten Filter befindet, sich zumindest ein Teil des zweiten Strömungskanals unter dem ersten Filter befindet und sich die erste Öffnung über dem ersten Filter befindet;
die erste Montageplatte mit einer Trennwand verbunden ist, ein unteres Ende der Trennwand mit einer Seite des ersten Filters abseits von der zweiten Öffnung verbunden ist und ein oberes Ende der Trennwand mit einer oberen Wand des ersten Strömungskanals verbunden ist.

7. Batteriepack nach Anspruch 5, **dadurch gekennzeichnet, dass** der Verbindungsanschluss einen zweiten Verbindungsanschluss (342) umfasst und der Filter einen zweiten Filter (52) umfasst, der sich an dem zweiten Verbindungsanschluss befindet;
der Montagehohlraum einen zweiten Montagehohlraum (112) umfasst, in den der zweite Filter eingesetzt werden kann, und der zweite Montagehohlraum benachbart zu dem zweiten Verbindungsanschluss angeordnet ist;
die Montageplatte eine zweite Montageplatte (42) umfasst, die den zweiten Montagehohlraum schließt,
und die zweite Öffnung in der zweiten Montageplatte gebildet ist.

8. Batteriepack nach Anspruch 7, **dadurch gekennzeichnet, dass** der zweite Filter ein horizontales Filterelement und ein geneigtes Filterelement umfasst, wobei ein Ende des geneigten Filterelements mit dem horizontalen Filter verbunden ist und sich das andere Ende des geneigten Filterelements über dem horizontalen Filter befindet;
sich zumindest ein Teil des ersten Strömungskanals über dem horizontalen Filterelement befindet, sich zumindest ein Teil des zweiten Strömungskanals unter dem horizontalen Filterelement befindet und das andere Ende des geneigten Filterelements mit einer oberen Wand des ersten Strömungskanals verbunden ist;
sich die zweite Öffnung unter dem zweiten Filter befindet und ein Teil einer Randkontur der zweiten Öffnung mit der Form des zweiten Filters übereinstimmt.

9. Batteriepack nach einem der Ansprüche 1-8, **dadurch gekennzeichnet, dass** die Seitenwand mit einer Vielzahl von Mikroporen (12) bereitgestellt ist und die Mikroporen in Kommunikation mit zumindest einem von dem ersten Strömungskanal und dem zweiten Strömungskanal verbunden sind.

10. Batteriepack nach Anspruch 9, **dadurch gekennzeichnet, dass** eine Oberfläche der Mikroporen mit einer Barrieremembran bereitgestellt ist, die der Kühlflüssigkeit ermöglichen kann, durchzugehen und Verunreinigungen zu blockieren.

## Revendications

1. Bloc-batterie (100) comprenant :
un boîtier (1) qui délimite une cavité de réception (10), dans lequel le boîtier comporte une paroi latérale (11) ;
une cellule de batterie (2) agencée dans la cavité de réception ;
du liquide de refroidissement contenu dans la cavité de réception, dans lequel la cellule de batterie est au moins partiellement immergée dans le liquide de refroidissement ;
dans lequel un premier canal d'écoulement (31) et un second canal d'écoulement (32) sont définis à l'intérieur de la paroi latérale, le premier canal d'écoulement et le second canal d'écoulement sont interconnectés via un orifice de raccordement (341, 342)
un filtre (51, 52, 521, 522) est agencé au niveau de l'orifice de raccordement, et le filtre permet au liquide de refroidissement de le traverser mais bloque les impuretés ;
la paroi latérale est pourvue d'une première ouverture (411) et d'une seconde ouverture (421), la première ouverture est raccordée au premier canal d'écoulement, et la seconde ouverture est raccordée au second canal d'écoulement, et le liquide de refroidissement est configuré pour s'écouler du second canal d'écoulement au premier canal d'écoulement.

2. Bloc-batterie selon la revendication 1, **caractérisé en ce que** la paroi latérale est pourvue d'une cavité de montage (110, 111, 112) dans laquelle le filtre peut être inséré, et la cavité de montage est agencée de manière adjacente à l'orifice de raccordement ; et la paroi latérale comprend en outre une plaque de montage (4, 41, 42) pour fermer la cavité de montage.

3. Bloc-batterie selon la revendication 2, **caractérisé en ce que** le filtre est raccordé de manière fixe à la plaque de montage, et la plaque de montage est détachable sur la paroi latérale.

4. Bloc-batterie selon la revendication 2, **caractérisé en ce qu'**une partie de la cavité de montage est opposée au premier canal d'écoulement et une autre partie de celle-ci est opposée au second canal d'écoulement, l'orifice de raccordement est ouvert vers la cavité de montage, et le filtre est enfiché dans l'orifice de raccordement à travers la cavité de montage ;
la première ouverture et/ou la seconde ouverture sont formées dans la plaque de montage.

5. Bloc-batterie selon la revendication 4, **caractérisé en ce que** l'orifice de raccordement comprend un premier orifice de raccordement (341) et le filtre comprend un premier filtre (51) situé au niveau du premier orifice de raccordement ;
la cavité de montage comprend une première cavité de montage (111) dans laquelle le premier filtre peut être inséré,
et la première cavité de montage est agencée adjacente au premier orifice de raccordement ;
la plaque de montage comprend une première plaque de montage (41) qui ferme la première cavité de montage, et
la première ouverture est formée dans la première plaque de montage.

6. Bloc-batterie selon la revendication 5, **caractérisé en ce que** le premier filtre est agencé horizontalement, au moins une partie du premier canal d'écoulement est située au-dessus du premier filtre, au moins une partie du second canal d'écoulement est située en dessous du premier filtre, et la première ouverture est située au-dessus du premier filtre ;
la première plaque de montage est raccordée à un panneau de séparation, une extrémité inférieure du panneau de séparation est raccordée à un côté du premier filtre éloigné de la seconde ouverture, et une extrémité supérieure du panneau de séparation est raccordée à une paroi supérieure du premier canal d'écoulement.

7. Bloc-batterie selon la revendication 5,
**caractérisé en ce que** l'orifice de raccordement comprend un second orifice de raccordement (342), et le filtre comprend un second filtre (52) situé au niveau du second orifice de raccordement ;
la cavité de montage comprend une seconde cavité de montage (112) dans laquelle le second filtre peut être inséré, et la seconde cavité de montage est agencée de manière adjacente au second orifice de raccordement ;
la plaque de montage comprend une seconde plaque de montage (42) qui ferme la seconde cavité de montage,
et la seconde ouverture est formée dans la seconde plaque de montage.

8. Bloc-batterie selon la revendication 7, **caractérisé en ce que** le second filtre comprend un élément de filtre horizontal et un élément de filtre incliné, une extrémité de l'élément de filtre incliné est raccordée au filtre horizontal, et l'autre extrémité de l'élément de filtre incliné est située au-dessus du filtre horizontal ;
au moins une partie du premier canal d'écoulement est située au-dessus de l'élément de filtre horizontal, au moins une partie du second canal d'écoulement est située en dessous de l'élément de filtre horizontal, et l'autre extrémité de l'élément de filtre incliné est raccordée à une paroi supérieure du premier canal d'écoulement ;
la seconde ouverture est située sous le second filtre, et une partie d'un contour de bord de la seconde ouverture est compatible avec la forme du second filtre.

9. Bloc-batterie selon l'une quelconque des revendications 1 à 8, **caractérisé en ce que** la paroi latérale est pourvue d'une pluralité de micropores (12), et les micropores sont connectés en communication avec au moins l'un du premier canal d'écoulement et du second canal d'écoulement.

10. Bloc-batterie selon la revendication 9, **caractérisé en ce qu'**une surface des micropores est pourvue d'un diaphragme barrière qui peut permettre au liquide de refroidissement de le traverser mais et bloque les impuretés.
